# EUROPEAN PATENT SPECIFICATION

(11) **EP 1 159 596 B1**
(45) Date of publication and mention of the grant of the patent: **21.09.2005**
(21) Application number: 00906929.5
(22) Date of filing: 14.01.2000
(51) Int. Cl.: G01M 17/02, G01B 11/22

(54) **HAND HELD PROBE FOR MEASURING TIRE TREAD WEAR**
HANDPROBE ZUR MESSUNG DES ABRIEBS AM LAUFFLäCHENPROFIL EINES REIFENS
SONDE A MAIN POUR MESURER L'USURE DE LA BANDE DE ROULEMENT D'UN PNEU

(30) Priority: 14.01.1999 US 115915 P
(43) Date of publication of application: 05.12.2001
(73) Proprietor: Mitutoyo (UK) Limited, Hampshire SP10 3UX (GB)
(72) Inventor: TRACY, Roger H., Chicago, IL 60611-4485 (US); REEVES, Edwin, H., Columbia, SC 29212 (US); RADCLYFFE, Nicholas J., Wingrave, Buckinghamshire HP22 4PX (GB); LONGDEN, Robert, Mark, Northington, Hampshire SO24 9TG (GB)
(74) Representative: Howick, Nicholas Keith
(86) International application number: PCT/US2000/000989
(87) International publication number: WO 2000/042409

(56) References cited:
- EP-A- 0 869 330
- WO-A-96/37754
- DE-A- 4 316 984
- GB-A- 2 342 448
- US-A- 3 918 816
- US-A- 4 526 030
- US-A- 4 631 831
- US-A- 6 034 676
- PATENT ABSTRACTS OF JAPAN vol. 1999, no. 01, 29 January 1999 (1999-01-29) -& JP 10 288519 A (OMRON CORP), 27 October 1998 (1998-10-27)
- PATENT ABSTRACTS OF JAPAN vol. 1997, no. 06, 30 June 1997 (1997-06-30) & JP 09 049719 A (OMRON CORP), 18 February 1997 (1997-02-18)

## Description

### 1. Field of the Invention:

The present invention relates to devices for measuring tire tread wear. More specifically, the present invention is a device for determining the tread profile by electro-optical measurements so that tread wear can be quantified.

### 2. Background of the Invention:

Tire treads are defined by a number of grooves or channels cut into the peripheral portion of the tire. The treads are the portions of the periphery that come into contact with the road.

Tire treads give tires traction in cornering and stopping. Tire treads, however, wear during the course of use. Eventually, treads wear to the point where their ability to provide traction is compromised and the tire needs to be replaced or recapped.

Because tire treads wear slowly, and the amount of wear from day to day or week to week is imperceptible, frequent checking is unnecessary. Yet, unless a tire is checked for the depth of its treads at some reasonable interval, an excessively worn tire can be overlooked. Checking tire tread depth at intervals can allow a reasonably prediction as to when the tire will need to be replaced. Furthermore, such a prediction cannot be made, and, indeed, the amount of tread remaining can be difficult to quantify, without a measurement.

Many states have requirements about the condition of the treads of a tire and require the replacement of tires when they become excessively worn. Fleet managers may have their own internal requirements for replacement of tires that are worn based on tread depth or after a specified number of miles. Simple gauges or rulers are simply not accurate enough. Accurate measurement of tire tread depth is difficult to do without removing the tire and measuring the tread with special electro-optical measuring devices. See for example, the patents of Sube et al issued September 21, 1993, US No. 5,245,867, Dory et al, issued October 5, 1993, US No. 5,249,460 or the Japaneese Patent Abstracts PAJ Pub.No. 10288519 or PAJ Pub.No. 09 049719. In order to obtain an accurate measurement, the tire is suspended so that it is not engaging a surface. These devices are expensive and require a good deal of time and effort for checking the depth of the tread of a single tire. However, there remains a need for accurate tire tread depth measurement that does not have the defects of the prior art and that measures the profile of the tire tread so that tread depth can be quantified

### SUMMARY OF THE INVENTION

According to its major aspects and briefly recited, the present invention is a probe for measuring the profile of a tire tread as defined in claim 1. A tire tread profile is a two-dimensional plot of the distance from each point on a fixed reference line running across the tire from side to side to the nearest point on the tire surface. This plot will show the differences in the distances to the line for the treads and the channels and thus the amount of wear on the treads. The hand held probe comprises a housing with a slit formed parallel to its major axis, a handle attached to the proximal end of the housing, a range finder mounted inside the housing in such a way that it can traverse much of the length of the tube while directing light from a laser through a window mounted over the slit, and a bracket that is carried near the proximal end of the tube to enable the user to hold the probe in position against the tire. The output from the device is via a computer port proximate to the handle or an IR or RF transmitter from the end of the handle. Power is supplied to the device by batteries in the handle.

The present invention also provides a method for measuring a tread profile as defined in claim 11.

The housing of the probe is placed against the tire with the slit and its window facing the tread. Preferably, the housing has an concave arcuate portion formed therein to define two edges of the housing that can act as supports on either side of the window to rest against the tire. When the device is pushed laterally toward the near side of the tire until it engages the tire, the device is then stabilized and in position to make a measurement. With the housing thus in position, the reference line with respect to the tire is set. The device is activated by pressing an "on" button, causing the range finder to determine the distance from the range finder tc the tire as the range finder slowly traverses the length of the housing. The distance data - in terms of x and y coordinates - is fed to the computer via either the computer port on the proximal end of the housing or the IR or RF window on the end of the handle. The computer can display the distance to the tread and to channels between treads as output, thus displaying the profile of the tire. A computer suitably programmed with local tread requirements can also determine if the tire is acceptable or not.

An advantage of the present device is its simplicity of use. The bracket and arcuate housing make it easy to position against the tire so that it is stable. The computer port that supports data transmission to a computer make the results of the measurement quickly available to the user via any computer.

Another advantage of the present invention is that it provides a tire tread profile rather than a series of single distance measurements. The profile of a tire provides more information than any single measurement and is a more reliable indicator of tread wear than a series of individual measurements, and quicker to obtain.

The IR or RF window in the base of the handle is still another feature of the present invention. This window makes it possible to avoid use of a cable when operating the present handheld tire tread profiler.

Other features and their advantages will be apparent to those skilled in the art of tread depth measurement from a careful reading of the Detailed Description of Preferred Embodiments accompanied by the following drawings.

### BRIEF DESCRIPTION OF THE DRAWINGS

In the drawings,
Fig. 1 is a perspective view of the probe according to a preferred embodiment of the present invention placed against a tire;
Fig. 2 is a side, cross sectional view of a detail of the housing of the probe of Fig. 1; and
Fig. 3 is a view of a display on the computer on the probe of Fig. 1 with a sample display.

### DETAILED DESCRIPTION OF PREFERRED EMBODIMENTS

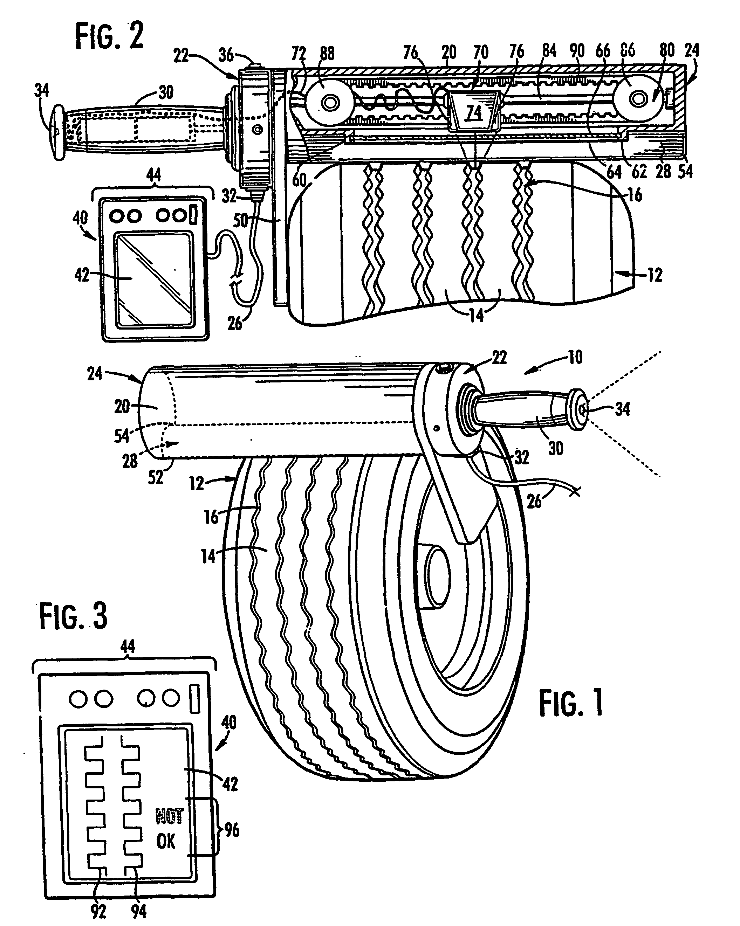

The present invention is a hand-held probe for measuring the depth of tire treads. Tire treads are integral, radial projections about the circumference of a vehicular tire separated by narrow gaps or channels from each other. Fig. 1 illustrates the present probe, indicated by reference number 10 in position for a measurement against a tire 12 with treads 14. Gaps 16 are between treads 14. Probe 10 determines the difference in radial distance between the bottom of gaps 16 and the tops of treads 14 and whether this difference meets whatever preselected requirements are imposed by the user or other authority.

Probe 10 comprises a generally cylindrical housing 20 having a proximal end 22 and a distal end 24. Housing 20 is made of light-weight tubing such as aluminum, steel, plastic such as nylon, or composite materials. A handle 30 is fitted on proximal end 22 and an on/off button 36. Near handle is serial port 32 for connection to a small computer 40 with display 42 and controls 44 via a cable 26. Computer 40 is preferably of the size of a palmtop computer such as that sold under the brand name PALM PILOT, CASSIOPEIA or PSION. These types of computers can receive data into memory and process them for display and storage in a manner well known in the art. Stored data can later be downloaded to a different computer as desired.

Near proximal end 22 is a bracket 50 for engaging the side of tire 12 for stability and to help in aligning probe 10, as will be described more fully below. Along the major axis of housing 20 is a window 60 having a frame 62 with a slit 64 covered by an optical glass 66 to keep dust and dirt out of housing 20. The length of slit 64 should be just as wide as the widest tire to be encountered.

Housing 20 is hollow, has a concave arcuate shape along one side at 28 and is dimensioned internally to house a distance range finder 70 and a carrier assembly 80 for moving distance finder 70 along window 60 while enabling range finder 70 to measure distance (Y-coordinate) from it to tire 12 as it moves along housing 20 (X-coordinate) when probe 10 is properly positioned against tire 12. Range finder 70 sends measurement data to computer 40 by internal cable 72 for computation and display of results either through serial port 32 or IR (infrared) or RF (radio frequency) transmission window 34 in the base of handle 30. By measuring distance between the reference line, which is defined by the location of the distance finder 70 as it traverses housing 20, and the nearest point on tire 12, the tire profile along its rolling face from side to side can be determined and, by subtraction from the reference, the difference in distance between the top of treads 14 and the bottom of gaps 16. This difference will either meet or not meet a preselected criterion storable in computer 40. Computer 40 may be programmed to apply local criteria to the distance measurement and thus produce an "OK" or "NOT OK" along with the distance 92 and the profile 94, as shown in Fig. 3.

During operation, probe 10 is held against tire 12 with the plane of window 60 parallel to the tangent of tire 12 and the two edges 52, 54 of housing 20 against the surface of tire 12 and bracket 50 against the side of tire 12. This "three-point" contact allows probe 10 to have a complete view of tread 14's cross section and be stable for the measurement. Stability is important to preserve the integrity of the line of reference to the tire defined by the movement of the range finder 70.

Range finder 70, which is mounted on the inside of housing 20 can measure the distance from a reference point to any opaque object directly in front of it. Range finder 70 must have a range of operation not less than 2.54 cm (one inch) in front of it and not more than 5.08 cm (two inches) away from the device; that is, it must be capable of measuring the distance to an object as close as 2.54 cm (one inch) and as distant as 5.08 cm (two inches) away. This range allows range finder 70 to function through the thickness of the glass 64 and still have sufficient range to reach the bottom of a gap between treads of a deep truck tire. Range finder 70 must have very tight field of view so as to be able to accurately detect the edge of treads 14 and not produce false readings taken partially on top of treads 14 and partially in gaps 16.

Range finder 70 employs a diode laser light source 74 and two linear position sensors 76 arranged so as to be able to measure the distance to tire 12 when probe 10 is positioned properly against tire 12. Light source 74 is fitted with optics to produce a tightly focused light spot on tire 12. Light is projected toward tire 12 on a line which is parallel to a tire radius vector. An image of the spot on tire 12 is then focused on the linear position sensor 76. Linear position sensors 76 produce electrical signals proportional to the location of the spot on the sensor surface. The sensor is positioned at an angle to the laser so that the location of the focused spot on the sensor therefore functions as a laser triangulation distance measurement device.

The depth of gap 16 can be large compared to its width The narrow shape of gap 16 can block the view of a single linear position sensor when the laser spot is at the bottom of gap 16. This problem is most evident when the spot drops into gap 16 with the edge of tread 14 on the same side as that position sensors. To improve measurements in gaps 16, the present range finder 70 uses two position sensors 76. Sensors 76 are mounted at complementary angles on either side of laser light source 74. This improves the percentage of the width of the bottom of gaps 16 that can be measured.

To measure a complete cross section of tire 12, range finder 70 scans across tire 12's width carried by carrier assembly. Range finder 70 is mounted on a linear bearing 82 and guided with a rod 84 mounted parallel to the central axis of housing 20. A pulley 86, 88, is mounted at each end of rod 84 and motor-driven, toothed belt 90 is fitted between pulleys 86, 88. The motor-driven belt 90 is used to move range finder 70 along the length of rod 84 while measurement is being taken. The motor is not shown since this type of mechanism, similar to that of a printer head carrier is well known to those skilled in the art. See for example US Patent No. 5,162,916. Batteries 98 to power the range finder motor are located in handle 30.

The position of range finder 70 along rod 84 may be measured by a displacement transducer (not shown) or tracked using a stepper motor (not shown) on belt 90.

The tread profile is a data set consisting of points containing an X-coordinate which is the position of range finder 70 on guide rod 84 and a Y-coordinate which is the distance from range finder 70 to the surface of tire 12. These coordinates are transmitted to computer 40 by means of suitable and conventional data link such as cable 72.

Computer 40 can produce a plot of the data points to enable the user to ensure that the unit is functioning correctly. Display 42 shows a first plot 92 of actual distance to tire 12, a second plot 94 showing the difference in distance between a reference point on tread 14, and an indication as to whether the tread depth is sufficient or not according to a preselected criterion. Clearly various output can also be displayed from the received data, such as average and mean tread depth, minimum tread depth, and so on. Specific criteria as defined by local highway regulators may be applied to determine if the tire is passable. The measurements may also be used to predict when tire replacement will be required or the number of miles until tire replacement based on comparison with stored data about a particular tire or tires in general.

In use, probe 10 is placed against the rolling face of a tire 12 and pushed against tire 12 so that bracket 50 engages the side of tire 12 and window 60 is parallel to the tangent of tire 12 where the edges 52, 54, of probe 10 meet tire 12. Range finder 70 and carrier assembly are activated by pressing on/off button 36. Light source 74 on range finder 70 transmits a beam of well focused light onto tire 12 through window 60 and position sensors 76 adjacent light source 74 on range finder 70 perceive the distance from range finder 70 to tire 12. The data reflective of that distance are transmitted through cable 72 to computer 40 where the data is analyzed and displayed on display 42 for the operator.

It will be apparent to those skilled in the art of tread depth measurement that many modifications and substitutions can be made to the foregoing description of preferred embodiments without departing from the scope of the present invention, as defined by the appended claim.

## Claims

1. A probe (10) for measuring tread depth, said probe comprising:
a housing (20) having a window (60) formed therein, said housing (20) having a 5 proximal end (22) and a distal end (24);
range finding means (70) carried within said housing (20) and oriented so that said range finding means (70) directs a beam of light through said window (60);
means for moving said range finding means (70) parallel to said window (60) to define a line of reference to a tire for the beam of light;
gripping means (30) carried by said housing for gripping said housing; tire-engaging means (50) carried by said housing (20) at said proximal end (22): for engaging a side of a tire (12); and
means carried by said housing (20) and in operational connection with said range finding means (70) and said moving means for sending distance data from said range finding means (70) as said range finding means (70) is moved parallel to said window (60);
**characterised in that**:
the housing (20) additionally comprises two edges (52, 54) for engaging the rolling surface of the tire (12) in two more locations to provide, in use, a three point contact between said two edges (52, 54) and the tire-engaging means (50) of the housing on the one hand and the tire (12) on the other hand that preserves the integrity of the line of reference to the tire.

2. The probe (10) as recited in claim 1, further comprising a communications port means (32) carried by said gripping means (30) for communicating distance data to a computer (40).

3. A probe (10) for measuring tread depth as defined in claim 1, wherein:
the probe (10) is a hand held probe (10) gripable by said gripping means; and
the probe (10) comprises a communications port means for communicating distance data to a computer (40).

4. The probe (10) as recited in claim 2 or claim 3, wherein said communications port means transmits measurement data using an infrared transmission.

5. The probe (10) as recited in claim 2 or claim 3, wherein said communications port means transmits measurement data using radio frequency transmission.

6. The probe (10) as recited in any one of the preceding claims, wherein said housing has a concave arcuate edge formed between said proximal end (22) and said distal end (24) to provide the two edges (52, 54) for engaging the rolling surface of the tire (12).

7. The probe (10) as recited in any of the preceding claims, wherein said gripping means is a handle (30) carried by said proximal end (22) of said housing (20).

8. The probe (10) as recited in any one of the preceding claims, wherein the tire-engaging means (50) for engaging a side of a tire (12) is carried by said proximal end (22).

9. The probe (10) as recited in any one of the preceding claims, wherein, in use, said window (60) is positioned in contact with the tread of a tire (12).

10. The probe (10) as recited in any one of the preceding claims, further comprising a handheld computer (40), said handheld computer (40) in electrical communication with said range finding means (70), said handheld computer (40) having a display (42) and means for plotting the distance data.

11. A method for measuring the tread profile of a tire (12), said method comprising the steps of:
scanning the rolling face of a tire (12) using a probe (10) according to any one of the preceding claims so as to be in a three point contact with the rolling face of the tire (12) to determine the tread profile;
communicating said tread profile to a computer (40) having a display (42); and
plotting the tread profile on said display (42).

12. The method as recited in claim 11, wherein said scanning step and communicating step is performed by a probe (10) having a handle (30), said handle (30) having a communications port (32) that communicates said tread profile to said computer (40).

13. The method as recited in claim 11 or claim 12, wherein said tread profile is communicated to said computer (40) using a transmission selected from the group consisting of infrared and radio frequency.

14. The method as recited in any one of claims 11 to 13, wherein said scanning step is performed by a handheld probe (10).

15. The method as recited in any one of claims 11 to 14, further comprising the step of determining whether the tread profile complies with the minimum allowable tread profile listed in governmental regulations.

16. The method as recited in claim 15, further comprising the step of predicting when the tire needs to be replaced to comply with the minimum allowable tread profile listed in governmental regulations.

## Patentansprüche

1. Tastkopf (10) zum Messen der Profiltiefe, wobei der Tastkopf umfasst:
ein Gehäuse (20) mit einem Fenster (60), das darin ausgebildet ist, wobei das Gehäuse (20) ein proximales Ende (22) und ein distales Ende (24) hat;
Bereichsauffindungsmittel (70), getragen in dem Gehäuse (20) und so ausgerichtet, dass das Bereichsauffindungsmittel (70) einen Lichtstrahl durch das Fenster (60) leitet:
Mittel zum Bewegen des Bereichsauffindungsmittels (70) parallel zu dem Fenster (60), um eine Referenzlinie auf einem Reifen für den Lichtstrahl zu definieren;
Greifmittel (30), getragen durch das Gehäuse zum Greifen des Gehäuses;
Reifenanstellmittel (50), getragen durch das Gehäuse (20) an dem proximalen Ende (22) zum Angreifen einer Seite eines Reifens (12); und
Mittel, die durch das Gehäuse (20) getragen werden und in Wirkverbindung mit dem Bereichsfindungsmitteln (70) stehen und den Bewegungsmitteln zum Aussenden von Abstandsdaten von dem Bereichsfindungsmittel (70), wenn das Bereichsfindungsmittel (70) parallel zu dem Fenster (60) bewegt wird;
**dadurch gekennzeichnet, dass**:
das Gehäuse (20) zusätzlich zwei Enden (52, 54) zum Eingriff der Rollfläche des Reifens (12) in zwei oder mehr Punkte umfasst, um bei Gebrauch einen Drei-Punkt-Kontakt zwischen den beiden Enden (52, 54) und den Reifenanstellmitteln (50) des Gehäuses auf der einen Seite und des Reifens (12) auf der anderen Seite zu ergeben, was die Integrität der Referenzlinie zu dem Reifen bewahrt.

2. Tastkopf (10) nach Anspruch 1, weiterhin umfassend ein Kommunikationsportmittel (32), das durch die Greifmittel (30) getragen wird zum Kommunizieren von Abstandsdaten an einem Computer (40).

3. Tastkopf (10) zum Messen der Profiltiefe nach Anspruch 1, worin:
der Tastkopf (10) ein tragbarer Tastkopf (10) ist, der durch Greifmittel greifbar ist, und
der Tastkopf (10) ein Kommunikationsportmittel zum Kommunizieren von Abstandsdaten an einen Computer (40) umfasst.

4. Tastkopf (10) nach Anspruch 2 oder 3, worin das Kommunikationsportmittel Messdaten unter Verwendung von Infrarotübertragung überträgt.

5. Tastkopf (10) nach Anspruch 2 oder Anspruch 3, worin das Kommunikationsportmittel Messdaten unter Verwendung von Radiofrequenzübertragung überträgt.

6. Messkopf (10) nach einem der vorhergehenden Ansprüche, worin das Gehäuse ein konkaves bogenförmiges Ende hat, das zwischen dem proximalen Ende (22) und dem distalen Ende (24) ausgebildet ist, um zwei Enden (52, 54) zum Eingriff der Rollfläche des Reifens (12) zu bilden.

7. Tastkopf (10) nach einem der vorhergehenden Ansprüche, worin das Greifmittel ein Handgriff (30) ist, der am proximalen Ende (22) des Gehäuses (20) getragen ist.

8. Tastkopf (10) nach einem der vorhergehenden Ansprüche, worin die Reifenanstellmittel (50) zum Angreifen einer Seite eines Reifens (12) getragen werden durch das proximale Ende (22).

9. Tastkopf (10) nach einem der vorhergehenden Ansprüche, worin bei Verwendung das Fenster (60) in Kontakt mit dem Reifenprofil (12) positioniert wird.

10. Tastkopf (10) nach einem der vorhergehenden Ansprüche, weiterhin umfassend einen tragbaren Computer (40), wobei der tragbare Computer (40) in elektrischer Kommunikation mit dem Bereichsfindungsmittel (70) steht und der tragbare Computer (40) eine Anzeige (42) und Mittel zum Ausdrucken von Abstandsdaten hat.

11. Verfahren zum Messen der Profiltiefe eines Reifens (12), wobei das Verfahren die Schritte umfasst des:
Scannens der Rollseite eines Reifens (12) unter Verwendung eines Tastkopfs (10) nach einem der vorhergehenden Ansprüche, um einen Drei-Punkt-Kontakt mit der Rollfläche des Reifens (12) zu ergeben, um die Profiltiefe zu bestimmen;
Kommunizierens der Profiltiefe an einen Computer (40), der eine Anzeige (42) aufweist und graphischen Darstellens der Profiltiefe auf eine Anzeige (42).

12. Verfahren nach Anspruch 11, worin der Scanschritt und Kommunikationsschritt durch einen Tastkopf (10) mit einem Handgriff (30) ausgeführt werden, wobei der Handgriff (30) einen Kommunikationsport (32) aufweist, welcher das Laufflächenprofil an einen Computer (40) kommuniziert.

13. Verfahren nach Anspruch 11 oder 12, worin das Laufflächenprofil an den Computer (40) unter Verwendung einer Übertragung kommuniziert wird, die gewählt ist aus der Gruppe, die besteht aus Infrarot- und Radiofrequenz.

14. Verfahren nach einem der Ansprüche 11 bis 13, worin der Scanschritt durch einen tragbaren Tastkopf (10) durchgeführt wird.

15. Verfahren nach einem der Ansprüche 11 bis 14, weiterhin umfassend den Schritt zu bestimmen, ob das Laufflächenprofil das minimal erlaubte Laufflächenprofil einhält, das in Gesetzesbestimmungen angegeben ist.

16. Verfahren nach Anspruch 15, weiterhin umfassend den Schritt der Vorhersage, wann man den Reifen ersetzen muss, um mit dem minimal erlaubten Laufflächenprofil überein zu stimmen, das in Gesetzesbestimmungen angegeben ist.

## Revendications

1. Sonde (10) pour mesurer une profondeur d'une bande de roulement de pneu, la sonde comportant :
un boîtier (20) ayant formée en son sein une fenêtre (60), le boîtier (20) ayant une extrémité (22) proximale et une extrémité (24) distale ;
des moyens (70) de recherche de domaine portés à l'intérieur du boîtier (20) et orientés de sorte que les moyens (70) de recherche de domaine orientent un faisceau lumineux à travers la fenêtre (60) ;
des moyens pour déplacer les moyens (70) de recherche de domaine parallèlement à la fenêtre (60) pour définir une ligne de référence vers un pneu pour le faisceau lumineux ;
des moyens (30) de serrage portés par le boîtier pour serrer le boîtier ;
des moyens (50) de coopération de pneu portés par le boîtier (20) à ladite extrémité proximale (22) pour coopérer avec un côté d'un pneu (12) ; et
des moyens portés par le boîtier (20) et en liaison fonctionnelle avec les moyens (70) de recherche de domaine et les moyens mobiles pour envoyer des données de distance des moyens (70) de recherche de domaine lorsque les moyens (70) de recherche de domaine se déplacent parallèlement à la fenêtre (60) ;
**caractérisée en ce que** :
le boîtier (20) comporte, en outre, deux bords (52, 54) pour coopérer avec la surface de roulement du pneu (12) dans deux emplacements supplémentaires pour fournir, en utilisation, un contact à trois points entre les deux bords (52, 54) et les moyens (50) de coopération de pneu du boîtier, d'une part, et le pneu (12), d'autre part, qui préserve l'intégrité de la ligne de référence vers le pneu.

2. Sonde (10) suivant la revendication 1, comportant, en outre, des moyens (32) formant port de communication, portés par les moyens (30) de serrage pour communiquer des données de distance à un ordinateur (40).

3. Sonde (10) pour mesurer une profondeur de bande de roulement d'un pneu suivant la revendication 1, dans laquelle :
la sonde (10) est une sonde (10) portative, ou tenue à la main, qui peut être serrée par les moyens de serrage ; et
la sonde (10) comporte des moyens formant port de communication pour communiquer des données de distance à un ordinateur (40).

4. Sonde (10) suivant la revendication 2 ou la revendication 3, dans laquelle les moyens formant port de communication émettent des données de mesure en utilisant une transmission par infrarouges.

5. Sonde (10) suivant la revendication 2 ou la revendication 3, dans laquelle les moyens formant port de communication émettent des données de mesure en utilisant une transmission par fréquence radio.

6. Sonde (10) suivant l'une quelconque des revendications précédentes, dans laquelle le boîtier a un bord concave en forme d'arc formé entre l'extrémité (22) proximale et l'extrémité (24) distale pour mettre à disposition les deux bords (52, 54) pour coopérer avec la surface de roulement du pneu (12).

7. Sonde (10) suivant l'une quelconque des revendications précédentes, dans laquelle les moyens de serrage sont constitués d'une poignée (30) portée par l'extrémité (22) proximale du boîtier (20).

8. Sonde (10) suivant l'une quelconque des revendications précédentes, dans laquelle les moyens (50) de coopération de pneu pour coopérer avec un côté d'un pneu (12) sont portés par l'extrémité (22) proximale.

9. Sonde (10) suivant l'une quelconque des revendications précédentes, dans laquelle en utilisation, la fenêtre (60) est positionnée en contact avec la bande de roulement d'un pneu (12).

10. Sonde (10) suivant l'une quelconque des revendications précédentes, comportant, en outre, un ordinateur (40) portatif ou tenu à la main, l'ordinateur (40) portatif étant en communication électrique avec les moyens (70) de recherche de domaine, l'ordinateur (40) portatif ayant un dispositif (42) d'affichage et des moyens pour tracer les données de distance.

11. Procédé pour mesurer le profil de bande de roulement d'un pneu (12), le procédé comportant les étapes dans lesquelles :
on scanne ou balaie la face de roulement d'un pneu (12) en utilisant une sonde (10) conformément à l'une quelconque des revendications précédentes, de manière à être en un contact à trois points avec la face de roulement du pneu (12) pour déterminer le profil de bande de roulement ;
on communique le profil de bande de roulement à un ordinateur (40) ayant un dispositif (42) d'affichage ; et
on trace le profil de bande de roulement sur le dispositif (42) d'affichage.

12. Procédé suivant la revendication 11, dans lequel l'étape de balayage et l'étape de communication sont effectuées par une sonde (10) ayant une poignée (30), la poignée (30) ayant un port (32) de communication qui communique le profil de bande de roulement à l'ordinateur (40).

13. Procédé suivant la revendication 11 ou 12, dans lequel le profil de bande de roulement est communiqué à l'ordinateur (40) en utilisant une transmission sélectionnée à partir du groupe constitué de la radio fréquence et de l'infrarouge.

14. Procédé suivant l'une quelconque des revendications 11 à 13, dans lequel l'étape de balayage est effectuée par une sonde (10) portative.

15. Procédé suivant l'une quelconque des revendications 11 à 14, comportant, en outre, l'étape qui consiste à déterminer si le profil de bande de roulement est compatible avec le profil de bande de roulement minimum autorisé tel qu'il est listé dans des règlements gouvernementaux.

16. Procédé suivant la revendication 15, comportant, en outre, l'étape de prédiction de quand le pneu aura besoin d'être remplacé pour satisfaire les profils de bande de roulement minimum admissibles tels qu'ils sont listés dans des règlements gouvernementaux.
